# EUROPÄISCHE PATENTANMELDUNG

(11) **EP 1 484 166 A2**
(43) Veröffentlichungstag der Anmeldung: **08.12.2004**
(21) Anmeldenummer: 04008583.9
(22) Anmeldetag: 08.04.2004
(51) Int. Cl.: B29C 70/48, B29C 70/86, B62D 35/00

(54) **Verfahren zur Herstellung einer Spoilerlippe einer Luftleiteinrichtung für ein Kraftfahrzeug**

(30) Priorität: 06.06.2003 DE 10325652
(71) Anmelder: Dr.Ing. h.c.F. Porsche Aktiengesellschaft, 70435 Stuttgart (DE)
(72) Erfinder: Jungert, Dieter, 71287 Weissach (DE)

(57) **Zusammenfassung**

Die Erfindung betrifft ein Verfahren zur Herstellung einer Spoilerlippe einer Luftleiteinrichtung für ein Kraftfahrzeug, welche Spoilerlippe aus einem elastischen und dehnbaren Material gefertigt wird.

Es ist vorgesehen, die Spoilerlippe (16) aus Faserverbundwerkstoff herzustellen, wobei in eine Herstellform (45) im wesentlichen undehnbare Fasern (25) einer ersten Fasergruppe (24) eingebracht werden, die quer zur Richtung der Breitenerstreckung (BE) der Spoilerlippe (16) ausgerichtet werden, und in die Herstellform (45) das Ausgangsmaterial für die Matrix (23) eingespritzt wird sowie ein sich entlang eines freien Endes der Spoilerlippe (16) erstreckender Kanal (30) für ein biegeelastisches Element (31) freigelassen wird.

## Beschreibung

Bei der Erfindung wird ausgegangen von einem Verfahren zur Herstellung einer Spoilerlippe einer Luftleiteinrichtung für ein Kraftfahrzeug, gemäß Oberbegriff des Anspruchs 1.

Aus der nachveröffentlichten DE 101 60 748. 2 geht hervor, eine Spoilerlippe einer Luftleiteinrichtung aus einem dehnbaren und elastischen Material zu fertigen.

Aus der EP 0 303 012 A1 ist ein starrer Formkörper als Heckflügel bekannt, in den ein Stahlrohr eingesetzt ist.

Ferner sind in der DE 1 795 627 U formsteife Karosserieteile beschrieben, die mit einer Verstärkungsrippe versehen sind, die durch einen mit Kunststoff - Faserstreifen am Karosserieteil befestigten Schlauch gebildet ist.

Aufgabe der Erfindung ist es, ein gattungsgemäßes Herstellverfahren für eine optimierte Spoilerlippe anzugeben.

Gelöst wird diese Aufgabe mit einem Verfahren zum Herstellen einer Spoilerlippe, das die in Anspruch 1 angegebenen Merkmale zeigt. Weitere, die Erfindung ausgestaltende Merkmale sind in den Unteransprüchen enthalten.

Die mit der Erfindung hauptsächlich erzielten Vorteile sind darin zu sehen, dass mit den im wesentlichen undehnbaren Fasern der ersten Fasergruppe eine insbesondere in ausgefahrener Betriebsstellung formsteife Spoilerlippe hergestellt wird, die auch bei hohen Fahrgeschwindigkeiten und entsprechend hohen Luftdruckkräften kaum bzw. unwesentlich verformt wird, wodurch die gewünschte aerodynamische Wirkung der Spoilerlippe erhalten bleibt. Durch die undehnbaren Fasern mit der erfindungsgemäßen Ausrichtung quer zur Breitenerstreckung der Spoilerlippe verbleibt deren Dehnbarkeit in Richtung der Breitenerstreckung, was insbesondere für Kraftfahrzeuge mit einer gerundeten Bugform vorteilhaft ist. Durch die Verwendung des Faserverbundwerkstoffes ist die Spoilerlippe widerstandsfähiger bei Fremdkörpereinwirkung, so dass zudem das Betätigungselement durch die Spoilerlippe abgeschirmt wird. Außerdem wird der für das in die Spoilerlippe einzusetzende biegeelastische Element erforderliche Kanal mit ausgeformt, so dass dafür eine nachträgliche Material abtragende Bearbeitung der Spoilerlippe nicht erforderlich ist.

Nach einer Weiterbildung der Erfindung mit den in Anspruch 2 angegebenen Merkmalen wird die Matrix des Faserverbundwerkstoffes mit einer zweiten Fasergruppe verstärkt, die Fasern aufweist, die in Richtung der Breitenerstreckung der Spoilerlippe verlaufen und die elastisch dehnbar sind. Die Festigkeit der Spoilerlippe wird dadurch weiter verbessert und die Dehnbarkeit in Richtung der Breitenerstreckung bleibt erhalten. Außerdem können durch die elastisch dehnbaren Fasern der zweiten Fasergruppe höhere Rückstellkräfte für die Spoilerlippe bereit gestellt werden, wenn diese beim Bewegen von der Ruhestellung in die ausgefahrene Betriebsstellung in Richtung der Fahrzeugbreite gedehnt wird.

Dadurch, dass die Fasern zumindest teilweise um den Kanal herumgeführt werden, erhält - wie dies Anspruch 6 beschreibt - die Spoilerlippe auch im Bereich ihres freien Endes eine hohe Formsteifigkeit.

Mit den in Anspruch 9 genannten Merkmalen wird hinsichtlich der Herstellung der Spoilerlippe eine Vereinfachung erzielt.

In besonders bevorzugter Ausführungsform entsprechend Anspruch 10 wird ein pneumatisches Betätigungselement für die Spoilerlippe bereit gestellt, wobei der Schlauch mit wenigstens einer aufblasbare Kammer ausgestattet ist und der einem dehnbaren und elastischen Material hergestellt wird. Insbesondere kommt hierfür das Material der Matrix des Faserverbundwerkstoffes der Spoilerlippe zur Verwendung. Ein derartiges aufblasbares Betätigungselement, welches in Ruhestellung entleert und damit zusammenfaltbar ist, weist einen geringen Platzbedarf auf und gewährleistet dennoch ausreichende Betätigungskräfte, um die Spoilerlippe in die ausgefahrene Betriebsstellung überführen zu können. Beim Entleeren des Schlauches bzw. der Kammer wirken die vorstehend erwähnten Rückstellkräfte, die in der Spoilerlippe selbst aufgebaut wurden, welche somit aus der Betriebsstellung in die eingefahrene Ruhestellung selbsttätig zurückverlagert wird und dabei den Schlauch bzw. die Kammer zusammenfaltet.

Mit den in den Ansprüchen 16 und 17 angegebenen Ausführungsalternativen kann der Kanal für das biegeelastische Element einfach in der Spoilerlippe freigelassen werden.

Die Erfindung wird nachfolgend anhand von Ausführungsbeispielen mit Bezug auf die Zeichnung näher erläutert.

Es zeigen:
- Fi. 1a: ausschnittweise ein Kraftfahrzeug mit einer Frontpartie und einer Luftleiteinrichtung,
- Fig. 1b: eine vergrößerte Detaildarstellung der Luftleiteinrichtung nach Fig. 1a,
- Fig. 2a: nach einem ersten Ausführungsbeispiel die Luftleiteinrichtung in Schnittdarstellung,
- Fig. 2b: eine vergrößerte Detaildarstellung eines Betätigungselements nach Fig. 2a,
- Fig. 3: die Luftleiteinrichtung nach einem zweiten Ausführungsbeispiel,
- Fig. 4a: eine Spoilerlippe der Luftleiteinrichtung und
- Fig. 4b: in Schnittdarstellung eine Herstellform für die Spoilerlippe.

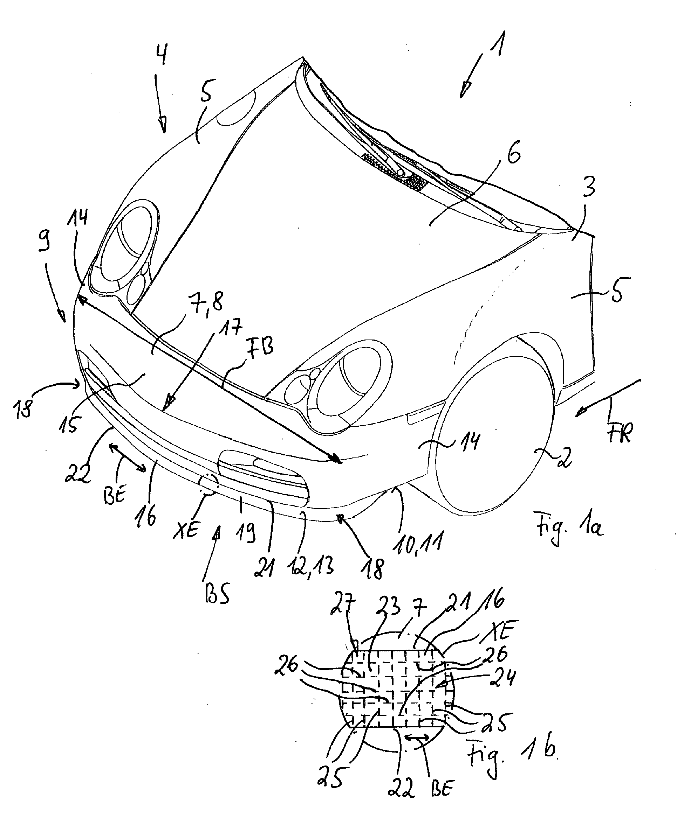

Fig. 1a zeigt ausschnittweise ein Kraftfahrzeug 1, von dessen von Rädern 2 getragenen Aufbau 3 lediglich eine Frontpartie 4 zu sehen ist. Die Frontpartie 4 umfasst Teile der Fahrzeugaußenhaut bildende seitliche Kotflügel 5, eine dazwischen angeordnete Haube 6 sowie ein der Haube 6 und den Kotflügeln 5 vorgelagerteres Bugteil 7, welches ein Verkleidungsteil 8 für einen dahinter angeordneten Stoßfänger (nicht dargestellt) darstellen kann. Mithin bildet das Bugteil 7 das vordere Ende 9 des Kraftfahrzeugs 1 bzw. der Frontpartie 4. An der Unterseite 10 der Frontpartie 4, insbesondere an dem unteren, entgegen der Fahrtrichtung FR verlaufenden Abschnitt 11 (Fig. 2a) des Bugteils 7, ist eine Luftleiteinrichtung 12 angeordnet, die einen Frontspoiler 13 des Kraftfahrzeugs 1 bildet. Im Bereich des Bugteils 7 weist das Kraftfahrzeug 1 eine Fahrzeugbreite FB auf, die zwischen seitlichen Längsfortsätzen 14 des Bugteils 7 gemessen wird, welche Längsfortsätze 14 über eine Basis 15 des somit U - förmigen Bugteils 7 verbunden sind.

Die Luftleiteinrichtung 12 erstreckt sich mit einer streifenförmigen Spoilerlippe 16 etwa über die Fahrzeugbreite FB und kann ferner - wie in Fig. 1a dargestellt - bis in die seitlichen Längsabschnitten 14 herumgeführt sein. Unabhängig davon, ob die Spoilerlippe 16 bis in die Längsabschnitte 14 reicht, ergibt sich für den Verlauf der Spoilerlippe 16 eine Kontur, die der gerundeten Kontur 17 der Basis 15 des Bugteils 7 folgt. Durch ihre Erstreckung bis in die Längsfortsätze 14 können gerundete Eckbereiche 18 der Spoilerlippe 16 vorgesehen sein.

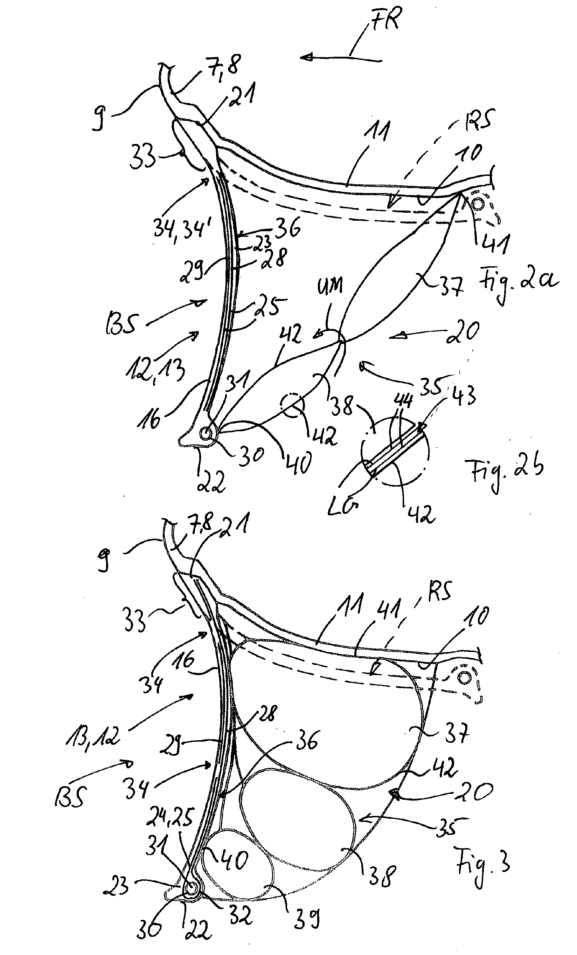

In Fig. 1a ist die Luftleiteinrichtung 12 in einer ausgefahrenen, etwa aufrechten Betriebsstellung BS gezeigt, in der die Spoilerlippe 16 eine nach unten gerichtete Verlängerung 19 des Bugteils 7 darstellt, was im übrigen aus den Fig. 2a und 3 deutlicher hervorgeht. In dieser Betriebsstellung BS wirkt die Spoilerlippe 16 als aerodynamisches Luftströmungsleitelement, das die Luftströmung im Fahrbetrieb des Kraftfahrzeugs 1 je nach gewünschten Vorgaben, wie beispielsweise günstiger Luftwiderstandsbeiwert, optimierte Abtriebskräfte oder ähnliches, beeinflusst. Die Luftleiteinrichtung 12 kann ferner aus der ausgefahrenen Betriebsstellung BS in eine eingefahrene, nach hinten gerichtete und etwa horizontale Ruhestellung RS verbracht werden, die in den Fig. 2a und 3 durch eine gestrichelt angedeutete Spoilerlippe 16 dargestellt ist. In der Ruhestellung RS weist die .Luftleiteinrichtung 12 im wesentlichen keine luftströmungsleitende Wirkung an dem Kraftfahrzeug 1 auf. Aus der Ruhestellung RS in die ausgefahrene Betriebsstellung BS wird die Spoilerlippe 16 über eine Betätigungseinrichtung 20 verlagert, die - in Fahrtrichtung FR gesehen - hinter der Spoilerlippe 16 liegt und weiter unten näher beschrieben ist.

Die in Fig. 1a mit XE gekennzeichnete Einzelheit der Spoilerlippe 16 ist in Fig. 1b vergrößert dargestellt. Die Spoilerlippe 16 ist mit ihrem oberen Befestigungsende 21 mit dem Bugteil 7 verbunden und ihr unteres Ende bildet ein freies Ende 22. Die Spoilerlippe 16 ist aus einem Faserverbundwerkstoff hergestellt, dessen Matrix 23 dehnbar und elastisch ist und insbesondere aus Kunststoff oder bevorzugt aus einem Elastomer hergestellt ist. In die Matrix 23 des Faserverbundwerkstoffes ist innenliegend eine erste Fasergruppe 24 eingebettet, die mehrere etwa parallel zueinander verlaufende Fasern 25 aufweist, die überdies quer, insbesondere rechtwinklig zur Richtung der Fahrzeugbreite FB bzw. quer zur Richtung der Breitenerstreckung BE der Spoilerlippe 16 ausgerichtet sind. Die Fasern 25 der ersten Fasergruppe 24 sind im wesentlichen undehnbar, das heißt, bei den im Fahrbetrieb des Kraftfahrzeugs 1 an der Spoilerlippe 16 wirkenden Kräften bzw. bei der Bewegung von der Ruhestellung RS in die Betriebsstellung BS unterliegen diese Fasern 25 keiner oder nur einer sehr unwesentlichen Längenveränderung. Die Spoilerlippe 16 erhält dadurch eine hohe Steifigkeit senkrecht zu ihrer Breitenerstreckung BE, so dass ein Abknicken oder übermäßiges Biegen aufgrund von Luftströmungsdruck, der im Fahrbetrieb des Kraftfahrzeugs 1 wirkt, weitgehend vermieden wird. Als Werkstoff für die Fasern 25 der ersten Fasergruppe 24 könnte Polyester, Polyamid oder Aramid verwendet werden.

Gemäß Fig. 1b können in die Matrix 23 mehrere Fasern 26 einer zweiten Fasergruppe 27 eingebettet sein, die in Richtung der Breitenerstreckung BE der Spoilerlippe 16 verlaufen, also entlang der Fahrzeugbreite FB. Im gezeigten Ausführungsbeispiel sind die Fasern 25 der ersten Fasergruppe 24 und die Fasern 26 der zweiten Fasergruppe 27 etwa rechtwinklig zueinander orientiert und die Fasern 25 verlaufen etwa rechtwinklig zur Breitenerstreckung BE bzw. die Fasern 26 verlaufen parallel zur Breitenerstreckung BE der Spoilerlippe 16. Ferner sind die Fasern 26 der zweiten Fasergruppe 27 aus einem dehnbaren Material, insbesondere Kunststoff, hergestellt, da die der gerundeten Kontur des Bugteils 7 folgende Spoilerlippe 16 beim Ausfahren von der Ruhestellung RS in die Betriebsstellung BS in Richtung der Breitenerstreckung BE gedehnt wird, was durch die dehnbaren Fasern 26 unwesentlich oder nicht behindert wird. Dennoch verstärken die dehnbaren Fasern 26 den Faserverbundwerkstoff.

Die Fasern 25 und 26 der ersten und zweiten Fasergruppe 24 und 27 können als Gewebe, Gestrick oder Gewirk oder dgl. in die Matrix 23 eingebettet sein. Alternativ könnten die Fasern 25 und 26 lose zueinander angeordnet sein und erst durch die Matrix 23 lagefixiert werden. Die Fasern 25 der ersten Fasergruppe 24 können ferner in mehreren Lagen 28 und 29 (Fig. 2a und 3) und etwa parallel zueinander verlaufend ausgerichtet sein, wobei der Faserverbundwerkstoff vorzugsweise einschichtig hergestellt ist. In den Fig. 2a und 3 sind Fasern 26 der zweiten Fasergruppe 27 der Einfachheit halber nicht eingezeichnet. Ansonsten sind in den Fig. 1a bis 3 gleiche bzw. gleichwirkende Teile mit identischen Bezugszeichen versehen.

Aus den Fig. 2a und 3 geht ferner hervor, dass an dem freien Ende 22 der Spoilerlippe 16 ein rechtwinklig durch die Zeichnungsebene verlaufender Kanal 30 in der Spoilerlippe 16 ausgebildet ist, der mithin entlang der Breitenerstreckung BE der Spoilerlippe 16 verläuft. In diesem Kanal 30 ist ein biegeelastisches Element 31, beispielsweise ein Stab, insbesondere Kunststoffstab KS, eingesetzt. Um den Kanal 30 bzw. das biegeelastische Element 31 ist wenigstens ein Faserstrang 32 mit undehnbaren Fasern, insbesondere Fasern 25 der ersten Fasergruppe 24, herumgeführt, welcher Faserstrang 32 in den zwei Lagen 28 und 29 der ersten Fasergruppe 24 liegt. Demnach verläuft dieser Faserstrang 32 von einem oberen Befestigungsabschnitt 33 am Befestigungsende 21 der Spoilerlippe 16 nach unten in Richtung zum freien Ende 22, wird dort um den Kanal . 30 herumgeführt und kann sich wieder bis in den wulstartigen Befestigungsabschnitt 33 erstrecken. Denkbar wäre es überdies, diesen Faserstrang 32 in zumindest einer der Lagen 28 oder 29 an wenigstens einer vorgebbaren Sollbiegestelle 34 zu unterbrechen, so dass in der Sollbiegestelle 34 die Anzahl der Lagen 28 bzw. 29 um eine Lage reduziert ist. In dem Bereich der Sollbiegestelle 34 wird die Steifigkeit der Spoilerlippe 16 reduziert, so dass hier ein gewolltes Biegen stattfinden kann. Eine derartige Sollbiegestelle 34 kann benachbart zum Befestigungsabschnitt 33 und/oder mit Abstand dazu vorgesehen sein, um das klappenartige Bewegen von der Ruhestellung RS in die Betriebsstellung BS der Spoilerlippe 16 zu vereinfachen. Diese Sollbiegestelle 34 kann also eine scharnierartige Einrichtung bilden.

Im in Fig. 2a gezeigten Ausführungsbeispiel reichen die Fasern 25 der ersten Fasergruppe 24 lediglich bis an das freie Ende 22 und an den Befestigungsabschnitt 33 heran, enden also jeweils davor. Somit wird benachbart zum Befestigungsabschnitt 33 die Sollbiegestelle 34 in einem faserfreien Bereich 34' ausgebildet. Da das biegeelastische Element 31 im Bereich des freien Endes 22 für eine ausreichende Steifigkeit der Spoilerlippe 16 sorgen kann, kann insbesondere aus Fertigungsgründen um das Herumführen der Fasern 25 bzw. des Faserstrangs 32 um den Kanal 30 verzichtet werden.

Das Betätigungselement 20 für die Spoilerlippe 16 ist in den Ausführungsbeispielen gemäß Fig. 2a und 3 jeweils aufblasbar und entleerbar ausgeführt und dazu weist wenigstens einen Schlauch 35 auf, der sich entlang der Fahrzeugbreite FB bzw. parallel zur Breitenerstreckung BE der Spoilerlippe 16 zwischen der Unterseite 10 und der Rückseite 36 der Spoilerlippe 16 erstreckt und in Betriebsstellung der Spoilerlippe 16 - in Fahrtrichtung FR gesehen - hinter der Spoilerlippe 16 liegt und diese gegenüber der Unterseite 10 abstützt. Der Schlauch 35 kann eine oder mehrere Kammern 37, 38, 39 aufweisen, die - nach Fig. 3 - übereinander liegen und ein im wesentlichen ovalen bzw. elliptischen Querschnitt, ggf. mit unterschiedlicher Querschnittgröße, aufweisen. Wie Fig. 2a zeigt, sind die einen elliptischen Querschnitt aufweisenden Kammern 37 und 38 mit ihren benachbart zueinander liegenden Enden aneinander befestigt und mit ihren voneinander beabstandet liegenden Enden 40, 41 im Bereich des freien Endes 22 der Spoilerlippe 16 bzw. an der Unterseite 10 befestigt.

Der Schlauch 35 mit seiner zumindest einen Kammer 37, 38 oder 39 wird vorzugsweise aus demselben Material wie die Matrix hergestellt und umfast jedenfalls ein dehnbares und elastisches Material, vorzugsweise das der Matrix 23. Die Wand 42 des Schlauches 35 bzw. der Kammern 37 bis 39 ist mit einer Faserverstärkung 43 (Fig. 2b) versehen, deren Fasern 44 in einer oder mehreren Lagen LG angeordnet sind und um den Umfang UM wenigstens einer der Kammern 37 bis 39 bzw. um den Umfang des Schlauches 35 in der Wand 42 verlaufen. Die Fasern 44 sind im wesentlichen undehnbar, wodurch ein übermäßiges Aufblasen der entsprechenden Kammer 37, 38 und/oder 39 bzw. des Schlauches im Querschnitt vermieden wird. Die Fasern 44 der Faserverstärkung 43 sind den undehnbaren Fasern 25 der ersten Fasergruppe 24 zugeordnet und vorzugsweise aus demselben Material gefertigt.

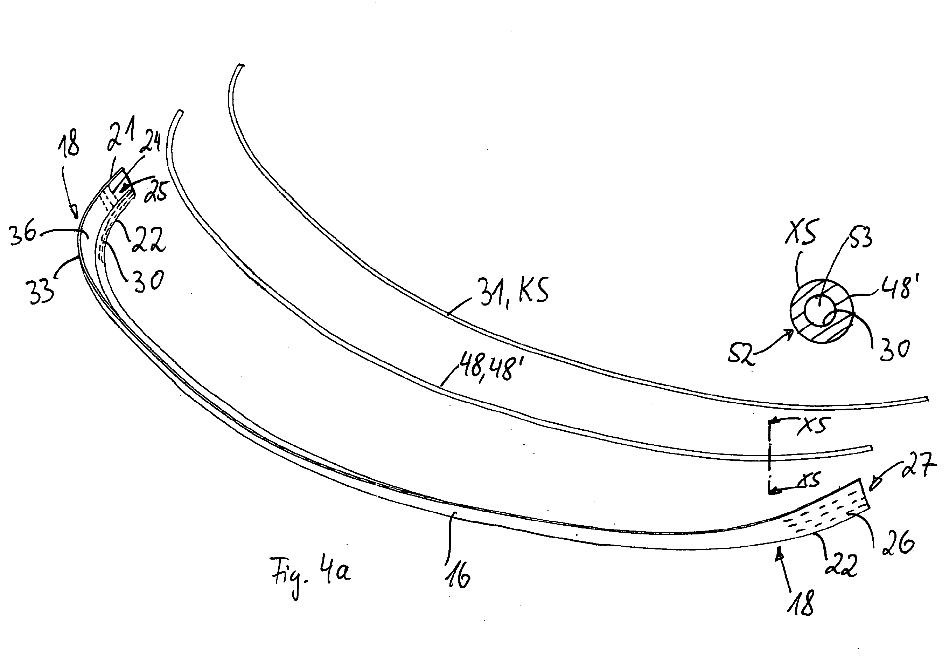

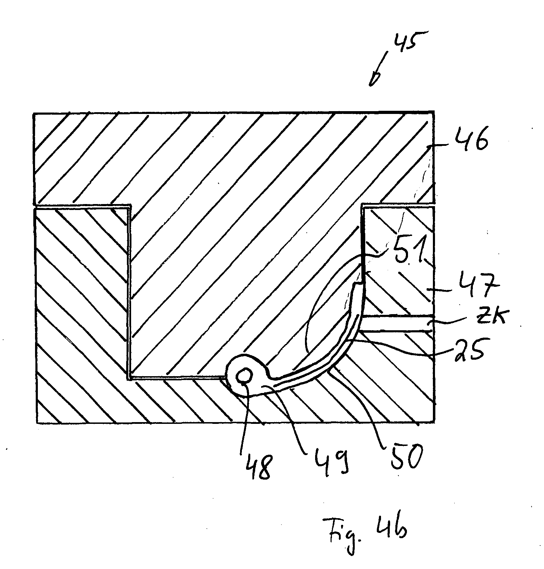

Anhand der Fig. 4a und 4b wird nachfolgend die Herstellung der vorstehend beschriebenen Spoilerlippe 16 näher erläutert. In eine mehrteilige, beispielsweise zweiteilige Herstellform 45 mit einem Oberteil 46 und einem Unterteil 47 werden die Fasern 25 der ersten Fasergruppe 24 in das Unterteil 47 eingelegt und entsprechend quer zur Breitenerstreckung BE der Spoilerlippe 16 ausgerichtet. Ferner wird in die Herstellform 45 ein länglicher Kern 48 eingelegt, der während des Herstellprozesses beim Einbringen des Ausgangsmaterials für die Matrix 23 den Raum für den Kanal 30 innerhalb der Spoilerlippe 16 im Bereich deren Ende 22 freihält bzw. freilässt. Das Ausgangsmaterial für die Matrix 23 umfasst Kautschuk, so dass daraus durch Erwärmung der Herstellform 45 durch Vulkanisieren ein Elastomer als Matrix 23 entsteht. Nachdem die bspw. vorgetränkten oder bspw. vorbeschichteten Fasern 25 der ersten Fasergruppe 24 und ggf. die Fasern 26 der zweiten Fasergruppe 27 sowie der Kern 48 in die Herstellform 45 eingelegt wurden, wird die Form 45 durch aufeinanderlegen der Teile 46 und 47 verschlossen, so dass für das Einbringen des Ausgangsmaterials für die Matrix 23 ein Hohlraum 49 zwischen dem vertieften Abschnitt 50 des Unterteils 47 und dem erhabenen Abschnitt 51 des Oberteils 46 frei bleibt. Nachfolgend wird das Ausgangsmaterial für die Matrix 23 in die Form 45 in den Hohlraum 49 vorzugsweise über einen Zuführkanal ZK eingebracht. Nach dem Erstarren des so herstellten Faserverbundwerkstoffes wird die Spoilerlippe 16 aus der Form 45 entnommen, also entformt, und der Kern 48 kann sofort oder später entfernt werden. In den von der Matrix 23 ausgesparten Kanal 30 kann anschließend das biegeelastische Element 31, beispielsweise ein faserverstärkter Kunststoffstab KS (Fig. 4a), eingesetzt werden.

In der Form 45 kann die Spoilerlippe 16 als erstarrter bzw. vorvulkanisierter Vorformling hergestellt und in einem nachgeordneten Fertigungsprozess in die endgültige Form gemäß Fig. 4a gebracht und dabei fertigvulkanisiert werden. Alternativ kann die Form 45 so ausgebildet sein, dass die Spoilerlippe 16 gemäß Fig. 4a darin fertiggestellt werden kann, so dass nachträglich noch das Element 31 eingesetzt wird.

An Stelle des entformbaren, aus Vollmaterial bestehenden Kerns 48 könnte ein hohler Kern 48' in Form eines Einlegeschlauches 52 mit hohlem Innern 53 verwendet werden, wie dies aus dem vergrößerten Schnitt XS gemäß Schnittlinie XS - XS in Fig. 4a hervorgeht. Nach dem Entformen der Spoilerlippe 16 verbleibt dieser Einlegeschlauch 52 im Bereich des freien Endes 22 und das hohle Innere 53 bildet den Kanal 30. Der Einlegeschlauch 52 ist vorzugsweise in Richtung der Breitenerstreckung BE der Spoilerlippe 16 dehnbar ausgeführt.

Außerdem kann an der entformten Spoilerlippe 16 durch Vulkanisieren oder Kleben das Betätigungselement 20 (Fig. 2a), insbesondere dessen Ende 40, befestigt werden.

## Patentansprüche

1. Verfahren zur Herstellung einer Spoilerlippe einer Luftleiteinrichtung für ein Kraftfahrzeug, welche Spoilerlippe aus einem elastischen und dehnbaren Material gefertigt wird, **dadurch gekennzeichnet, dass** in eine Herstellform (45) im wesentlichen undehnbare Fasern (25) einer ersten Fasergruppe (24) eingebracht werden, die quer zur Richtung der Breitenerstreckung (BE) der Spoilerlippe (16) ausgerichtet werden, und dass in die Herstellform (45) das Ausgangsmaterial für die Matrix (23) eingebracht wird, wobei ein sich entlang eines freien Endes der Spoilerlippe (16) erstreckender Kanal (30) für ein biegeelastisches Element (31) freigelassen wird.

2. Verfahren nach Anspruch 1, **dadurch gekennzeichnet, dass** vor dem Einbringen des Ausgangsmaterials für die Matrix (23) in die Herstellform (45) dehnbare Fasern (6) einer zweiten Fasergruppe (27) eingelegt werden, welche Fasern (26) in Richtung der Breitenerstreckung (BE) der Spoilerlippe (16) ausgerichtet werden.

3. Verfahren nach Anspruch 1 oder 2, **dadurch gekennzeichnet, dass** die Fasern (26, 27) der ersten und/oder zweiten Fasergruppe (24, 27) als Gewebe oder Gestrick oder Gewirk in die Herstellform (45) eingelegt werden.

4. Verfahren nach Anspruch 1, **dadurch gekennzeichnet, dass** der Faserverbundwerkstoff einschichtig gefertigt wird.

5. Verfahren nach Anspruch 1, **dadurch gekennzeichnet, dass** nach dem Entformen der Spoilerlippe (16) das biegeelastische Element (31) in den Kanal (30) eingesetzt wird.

6. Verfahren nach Anspruch 1, **dadurch gekennzeichnet, dass** zumindest einige Fasern (25) der ersten Fasergruppe (24) um den Kanal (30) zumindest teilweise herumgeführt werden.

7. Verfahren nach Anspruch 1, **dadurch gekennzeichnet, dass** die Fasern (25) der ersten Fasergruppe (24) in mehreren Faserlagen (28, 29) angeordnet werden, wobei zumindest ein Faserstrang (32) in zwei Faserlagen (28, 29) gelegt wird.

8. Verfahren nach Anspruch 7, **dadurch gekennzeichnet, dass** der Faserstrang (32) um den Kanal (30) herumgeführt wird.

9. Verfahren nach Anspruch 1, **dadurch gekennzeichnet, dass** die Fasern (25) der ersten Fasergruppe (24) bis an den Kanal (30) herangeführt werden.

10. Verfahren nach Anspruch 1, **dadurch gekennzeichnet, dass** ein Betätigungselement (20) an der Spoilerlippe (16) als Schlauch (35) mit zumindest einer aufblasbaren Kammer (37, 38, 39) ausgebildet wird, wobei der Schlauch (35) aus dehnbarem und elastischem Material, vorzugsweise dem der Matrix (23), hergestellt wird.

11. Verfahren nach Anspruch 10, **dadurch gekennzeichnet, dass** der Schlauch (35) nachträglich an der entformten Spoilerlippe (16), vorzugsweise durch Vulkanisieren, befestigt wird.

12. Verfahren nach Anspruch 1, **dadurch gekennzeichnet, dass** die Spoilerlippe (16) mit einen Befestigungsabschnitt (33) versehen wird, mit dem sie mit dem Kraftfahrzeug (1) verbindbar ist.

13. Verfahren nach Anspruch 14, **dadurch gekennzeichnet, dass** die Fasern (25) der ersten Fasergruppe (24) bis in oder an den Befestigungsabschnitt (33) gelegt werden.

14. Verfahren nach Anspruch 1, **dadurch gekennzeichnet, dass** durch Einlegen eines Kerns (48, 48') in die Herstellform (45) der Kanal (30) ausgespart wird.

15. Verfahren nach Anspruch 16, **dadurch gekennzeichnet, dass** der Kern (48) entformbar ist.

16. Verfahren nach Anspruch 16, **dadurch gekennzeichnet, dass** als Kern (48') ein Einlegeschlauch (52) verwendet wird, der nach dem Entformen der Spoilerlippe (16) darin verbleibt und dessen hohles Inneres (53) den Kanal (30) bildet.

17. Verfahren nach Anspruch 1, **dadurch gekennzeichnet, dass** die Herstellform (45) beheizt wird und für die Matrix (23) ein Kautschuk umfassendes Ausgangsmaterial verwendet wird.

18. Verfahren nach Anspruch 1, **dadurch gekennzeichnet, dass** in der Herstellform (45) die Spoilerlippe (16) als Vorformling hergestellt wird.
